# EUROPEAN PATENT APPLICATION

(11) **EP 2 923 925 A2**
(43) Date of publication of application: **30.09.2015**
(21) Application number: 15161509.3
(22) Date of filing: 27.03.2015
(51) Int. Cl.: B62D 65/12, B62D 65/18

(54) **UNIVERSAL BALANCE HOLDER FOR TRANSPORTING VEHICLE BODIES AND TRANSPORTING PLANT EQUIPPED THEREWITH**

(30) Priority: 27.03.2014 IT TO20140260
(71) Applicant: CPM S.P.A., 10138 Torino (IT)
(72) Inventor: Bellezza, Massimo, 10138 TORINO (IT)
(74) Representative: Plebani, Rinaldo

(57) **Abstract**

A plant (1) including a plurality of balance holders or hooks (3) actuated by a transporting device which moves them along a path; each hook carries a vehicle body fixed to longitudinal beams of the hook by means of rod devices (8, 8d); the plant includes at least one configuration station (10), in which each hook is configured according to the body to be received; each hook on the longitudinal beams is provided with receiving seats (22b, c, d) adapted to selectively receive mounting units (140c) for the rod devices (8, 8d) by means of locking devices (110).

## Description

The present invention relates to a balance holder that can be converted in a simple, automatic or manual manner, to selectively receive, one at a time, a plurality of vehicle bodies of different type from one another; the invention also relates to a transporting plant for vehicle bodies provided with a plurality of such balance holders and with means for reconfiguring them, preferably in automatic manner.

It is known that overhead conveyors are used to supply vehicle assembly plants of the type, for example, as the one described in EP2340982, in which a plurality of balance holders or "hooks" are caused to transit along a desired path, for example hung to specific elements which are movable along guides or tracks that define such a path; fixed to each hook or holder, in a specific loading station of the transporting plant, is a body on which subsequently assembling the various components of the relative vehicle to which it is intended. Each body is integrally held by a respective holder or "hook", which is generally portal-shaped and is provided underneath with a pair of longitudinal beams against which the body is held by means of a pair of "push rods" for each longitudinal beam, a front push rod and a rear one (with reference to the advancing direction of the holders and of the relative bodies along the guides or tracks), which consist of rotating pins provided with heads that bayonet engage respective seats obtained on the body.

Transporting plants of the type described are very efficient. Nevertheless, they have the drawback of having to be equipped each time with portal holders or "hooks" made according to the features of the body (or of the class of bodies) to be transported. Indeed, firstly, to properly hook the body, the push rod devices or "push rods" to be used must be of type suitable for the hooking seat on the body: hence there are two different groups of push rod devices, known in technical jargon with the terms "pin"-type and "slotted"-type; currently, if the plant must switch from transporting bodies that have hooking seats suitable for "pin"-type push rods to bodies that have hooking seats suitable for "slotted" push rods, all hooks must be replaced or processed with specific systems.

Furthermore, the vehicles, and accordingly, the relative bodies, are divided into several dimensional classes which identify the market segment thereof (for example, A, B, C, D, etc.) and which involve different body dimensions (length in particular). Accordingly, currently a same transporting plant cannot switch from transporting A-class vehicle bodies to, for example, C-class vehicle bodies, unless all hooks are replaced with others having longer longitudinal beams.

This state of things does not allow to make flexible transporting plants capable of managing bodies of any segment and class.

It is therefore the object of the present invention to overcome the drawbacks of the known art and in particular to provide a flexible plant for transporting bodies, in which there is no need to replace the hooks to allow the transport of bodies of different classes or segments and/or having different hooking seats. In particular, it is an object of the invention to provide a flexible plant, in which all operations required can be carried out also automatically, in addition to manually, and which is simple to achieve, has contained volumes, is reliable to operate and is relatively affordable.

Therefore, based on the invention, a transporting plant is provided as defined in claim 1.

A balance holder or universal "hook" is also provided, suitable for equipping a transporting device of the aforesaid type, capable of receiving, by means of a reconfiguration thereof which may be carried out both in automatic and manual mode, vehicle bodies belonging to different segments, according to claim 12.

Finally, the invention relates to a universal push rod device adapted to cooperate with different types of bodies to constrain them on the aforementioned balance holder, as defined in claim 13.

In particular, the plant comprises at least one configuration station, in which each balance holder is configured according to the body it must receive and in which plant each balance holder is provided, on each respective longitudinal beam thereof, with at least one receiving seat adapted to removably receive, through a mounting unit, a respective push rod device of the selected type. The configuration station is also preferably provided with at least one robot for selectively handling the mounting units and/or the push rod devices, by moving them on the balance holder and/or transferring them from the balance holder to any respective warehouses of the station and vice versa. Alternatively, the handling of the mounting units and/or of the push rod devices in the configuration station may occur manually.

Thereby, one same balance holder may be selectively equipped with push rod devices of the desired type, for example both of the "slotted" type and of the "pin" type, or as will be seen below, with a "universal" push rod device, which is mounted directly on the longitudinal beams or by means of the mounting units, which are selectively mounted in removable manner directly on the balance holder in one of a plurality of receiving seats conveniently arranged on each longitudinal beam of the balance holder, according to the body model to be transported.

Further features and advantages of the present invention will become more apparent from the following description of two non-limiting embodiments thereof, made with reference to the figures of the accompanying drawings, in which:
- figure 1A diagrammatically shows an elevation view of an assembly plant of mechanical components on vehicle bodies, provided with a transporting plant made according to the invention and partially illustrated using simple blocks;
- figure 1B diagrammatically shows a detail of the transporting plant of the invention and of a relative balance holder or universal "hook";
- figure 2 diagrammatically shows a front elevation view of the transporting plant according to the invention, at a specific configuration station thereof;
- figure 3 again diagrammatically shows, and with different details, a configuration station as the one in figure 2;
- figures 4 and 5 diagrammatically show a top plan view of components of the station in figures 2 and 3 and, on enlarged scale, of some details of the components in figure 4, respectively;
- figure 6 diagrammatically shows, on enlarged scale, an elevated sectional view of a first embodiment of details of the balance holder in figures 1B, 2 and 3;
- figures 7 and 8 show, on enlarged scale and partially diagrammatically for simplicity, a sectional plan view from the top of a longitudinal beam of the balance holder in figure 1B equipped with different components of the plant according to the invention;
- figures 9 and 10 diagrammatically show two different possible embodiments of the holder configuration in figure 7 and 8;
- figure 11 diagrammatically shows an inner detail of the longitudinal beam of the holder in figure 1B, in the holder configuration in figure 7;
- figure 12 shows the same view of the same detail in figure 6, but made according to a possible variant of the invention;
- figure 13 diagrammatically shows a top plan view of a second embodiment of the balance holder in figure 1B, of which only respective longitudinal beams and a component of the plant in figure 1A are shown for simplicity;
- figure 14 diagrammatically shows a top plan view of a construction detail of the plant components shown in figure 13;
- figures 15 and 16 show a same sectional view according to a layout plan XV-XV of the components in figure 14, shown in two different operating positions;
- figure 17 is a sectional view according to a layout plan XVII-XVII of the components in figure 16;
- figures 18 and 19 show a same lateral elevation and partly sectional view of the components shown in figures 15 and 16 in the respective operating positions; and
- figures 20 and 21 show a same elevation and longitudinal sectional view of a special component which may be mounted on the balance holder in figure 13.

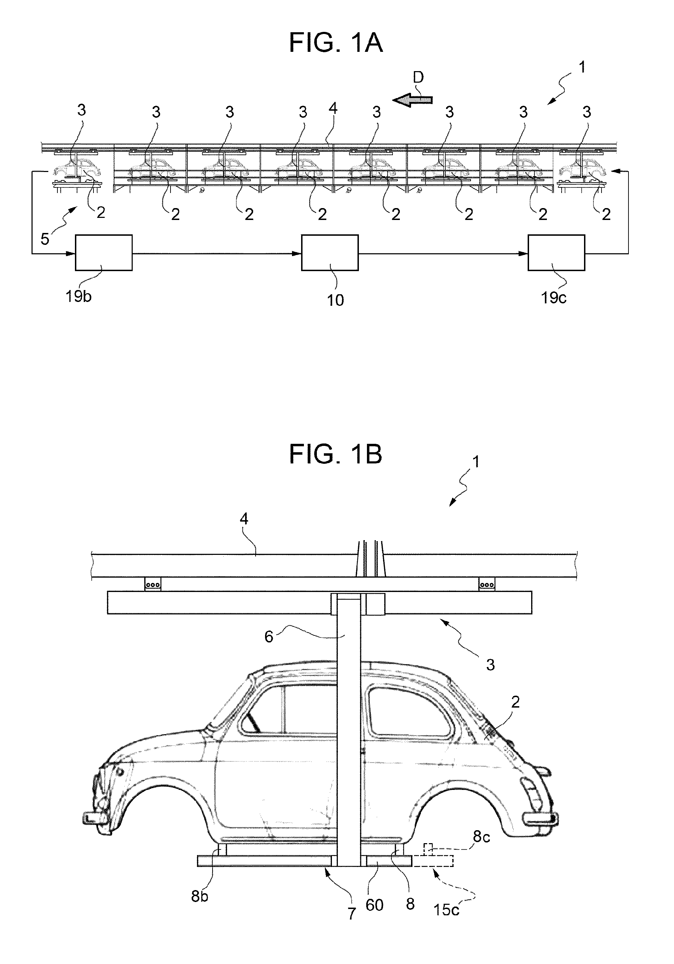

With reference to the figures from 1 to 12, and in particular with reference to figures 1A and 1B, numeral 1 indicates a transporting plant as a whole for vehicle bodies 2, comprising a plurality of balance holders 3, each adapted to integrally receive a respective body 2, and a transporting device 4, of any known type, which moves the balance holders 3 along a path, for example, at least partially defined by an assembly line 5 in the example shown in figure 1A.

Each balance holder 3 is hanging underneath the transporting device 4 by a coupling portion 6 thereof and comprising a pair of longitudinal beams 7 carried underneath by the coupling portion 6 parallel to a moving direction D (figure 1A) of the balance holders 3 along the transporting device 4.

Each longitudinal beam 7 is provided with at least one push rod device 8 (hereinafter also indicated simply as "rod" or "push rod" 8) of known type and therefore only diagrammatically illustrated (in this case shown of two push rod devices 8 - figure 1B - a first front device 8b and a second rear device 8c) adapted to lock a body 2 onto the longitudinal beam 7 in known manner.

According to the invention, plant 1 comprises at least one configuration station 10, in which each balance holder 3 is configured, in use, in entirely automatic manner or with the aid of one or more operators, according to body 2 which must be received, that is according to the vehicle segment of body 2 to be transported.

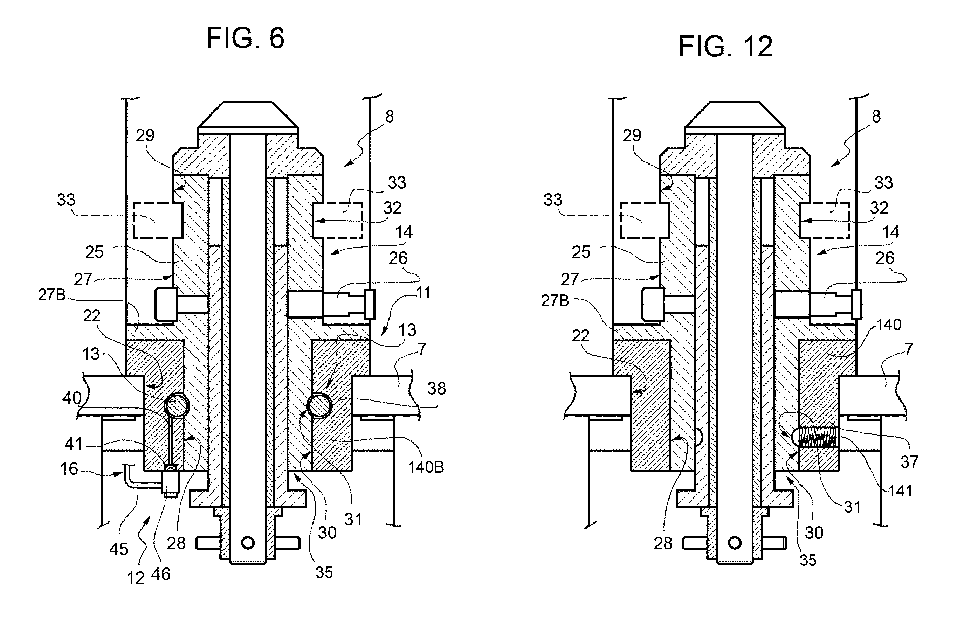

In combination with the presence of station 10, which will be described in detail further below, each balance holder 3 is provided on each longitudinal beam 7 with at least one receiving seat, in this non-limiting case disclosed, defined by a through or blind hole 22 (figures 6-12).

According to a first embodiment of the invention, the holes or receiving seats 22 are intended to selectively receive, in integral manner, the details of which are not shown for sake of simplicity, for example by means of screws, welding or other, a bushing 140 (figure 12) or a locking device 11 (figure 6) with pneumatic or hydraulic release. In other words, device 11 is of the "always coupled" type and may be disengaged temporarily only by feeding to it a pressurized fluid.

In particular, device 11 is a "female" device and is provided with first pneumatic or hydraulic supply means 12 and with mechanical coupling means 13 with pneumatic or hydraulic disconnection, overall of a known type (figure 6, 9, 10, 11), accommodated inside device 11.

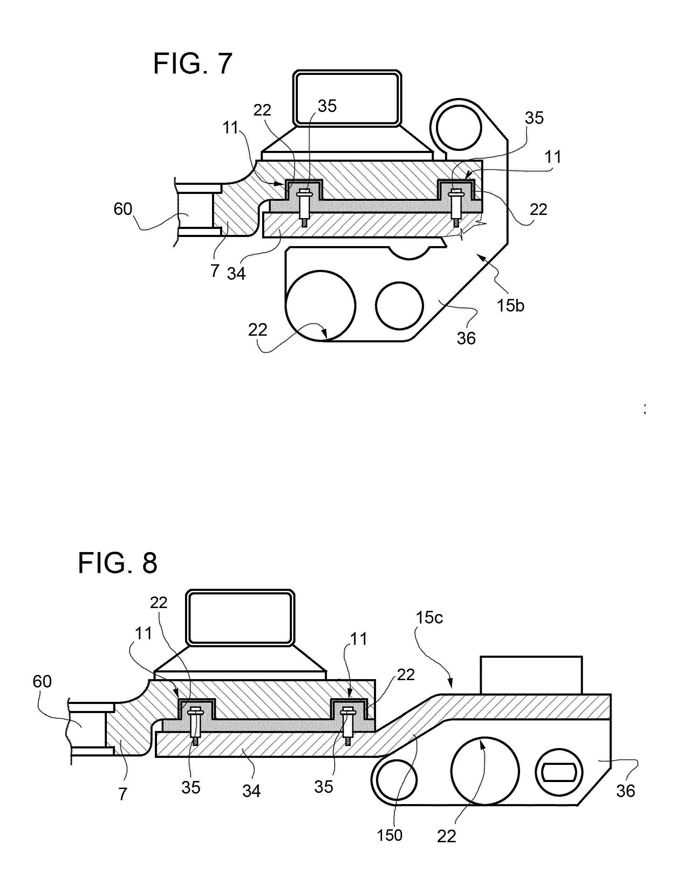

Bushing 140 and device 11, which will be described in greater detail below, are configured so as to be selectively adapted to receive, in use, respective first independent mounting units 14 (figures 6 and 12) each equipped with a respective push rod device 8 of selected type and, in particular device 11, respective second independent mounting units 15b, 15c (figures 7, 8) each forming, in use, an additional portion of the longitudinal beam.

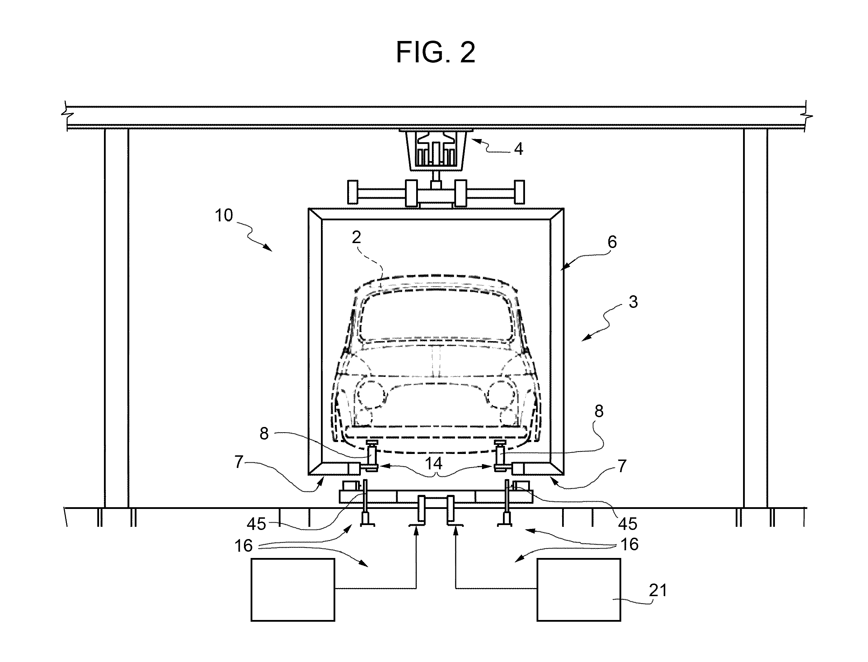

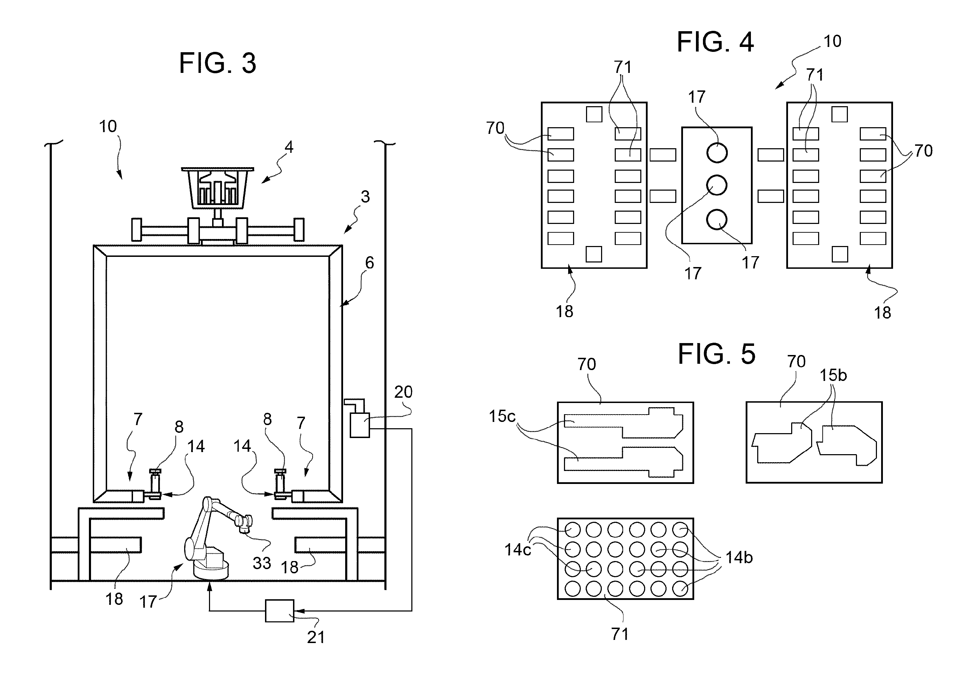

Further, the configuration station 10 is provided with second pneumatic or hydraulic supply means 16, indicated only diagrammatically in figure 2, which are complementary to the first pneumatic or hydraulic supply means 12, and, preferably, with at least one robot 17 (figure 3), for example a classic articulated arm robot with numeric control on three or four axes, for selectively handling the units 14 and 15b, by transferring them from a balance holder 3 in station 10 to respective warehouses 18 of station 10 or vice versa (figure 4).

In the non-limiting embodiment illustrated (figure 1A), in addition to being provided with the configuration station 10, indicated diagrammatically with a block, plant 1 is also provided with two stations 19b,c, in which the bodies 2 are respectively dismounted and mounted on the respective balance holders 3; station 10 is arranged between the unloading 19b and loading 19c stations of the bodies 2 and (figure 3) is provided with reference means 20, of any known type, for the balance holder 3, which are adapted to allow the accurate positioning thereof in a specific position on station 10, and are possibly connected with a control station 21, which possibly also controls robot 17 and the fixed pneumatic or hydraulic supply means 16 the station 10 is provided with and which, due to the reference means 20, can, in use, be arranged in correspondence with the longitudinal beams 7 and at the relative pneumatic or hydraulic supply means 12 of the female locking devices 11.

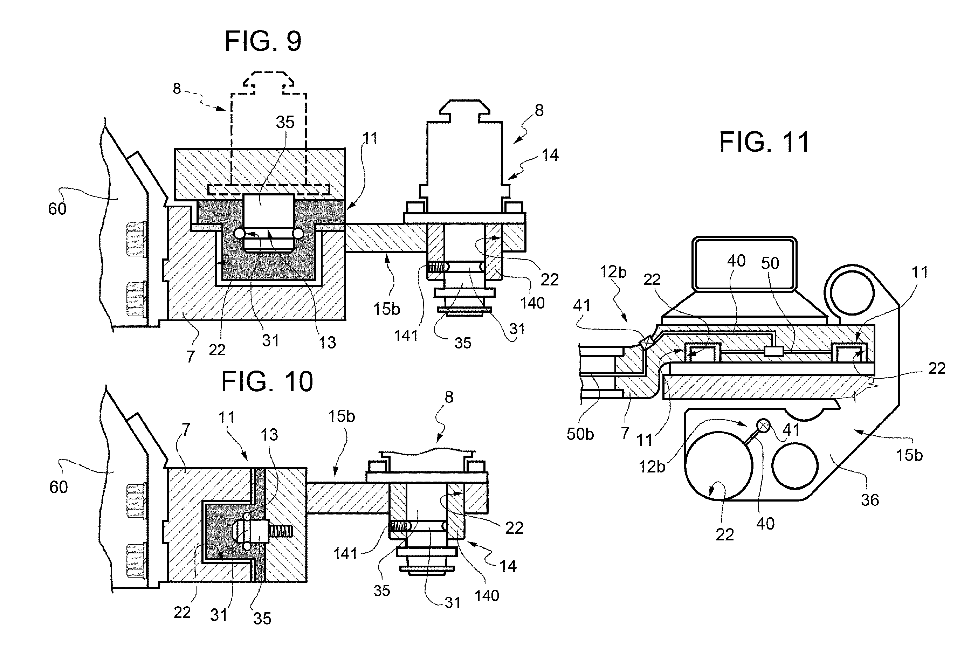

Preferably, the second mounting units 15b, 15c, which are independent from each other, are in turn each provided with at least one receiving seat or hole 22 similar and preferably identical to (therefore having same shape and dimensions) the hole or seat 22 carried by each longitudinal beam 7, therefore adapted to receive a bushing 140 (figures 9, 10) or a device 11 provided with the pneumatic or hydraulic supply means 12 and the mechanical coupling means 13 with pneumatic or hydraulic disconnection; according to the variant shown in figure 11, the independent mounting units 15b, 15c (unit 15b in figure 11) may be integrally provided with hydraulic or pneumatic supply means 12b (figure 11) of the same type as the means 12, but obtained at least partially inside the structure of unit 15b,c and connected directly with device 11. Being identical to the seats or holes 22 of the longitudinal beams 7, the seats or holes 22 of the units 15b,c are not illustrated in detail and reference for them may be made to figures 6 and 12, which diagrammatically illustrate in detail a front receiving seat of a longitudinal beam 7 occupied by a bushing 140 (figure 12) or by a "female" locking device 11 (figure 6). Therefore, when present, the seats 22 of the units 15b,c are each adapted to receive an independent unit 14, in the same manner in which these may be received by the front seats 22 of the longitudinal beams 7, while at the same time the units 15b,c may be integrally connected to the longitudinal beams 7 by means of the rear seats 22 of the longitudinal beams 7, for example provided with the devices 11.

According to a possible further variant, not shown in detail for simplicity and applicable both to the independent units 15b,c and to the longitudinal beams 7, in addition to belonging to an independent unit 14, the push rod devices 8 of the selected type may also be made integral, in removable or fixed manner, directly to a bushing 140, to then be inserted, possibly in removable manner, into a seat or hole 22.

According to one aspect of the invention, plant 1 comprises second independent mounting units of a first type 15b and of a second type 15c, illustrated diagrammatically in figures 7 and 8. The units 15c are longer (measured parallel to the direction D) than the units 15b and are shaped with a lateral fold 150 so as to form, once coupled on the longitudinal beams 7 in one or more of the seats/holes 22, an seamless extension of each longitudinal member 7 both in direction D of movement of the balance holders 3 along the transporting device 4, and in the direction transverse to direction D, so as to increase the empty space between the adjacent longitudinal beams 7 of each balance holder 3 and therefore to allow the transport of larger bodies.

Based on what is described hereto, it is also apparent that plant 1 according to the invention is configured so as to include (first) independent units 14 of a first type 14b and of a second type 14c (figure 5), not shown in detail for simplicity, which differ from each other only in that they each integrally carry a push rod device 8 (figure 6) of a known first so-called "pin" type (the units 14b), or of a known second so-called "slotted" type (the units 14c), respectively, which are different from each other. Essentially, the units 14 shown in figures 6 and 12 may be provided "*ad hoc*" with push rod devices (or push rods) 8 of different type according to needs, thus resulting in, for example, units 14b and 14c of at least two different types (which differ only in the structure of the push rod 8), and then stowed close to station 10 in a manner that will be seen.

To this end, the independent units 14 each comprise (figure 6) a flanged sleeve 25, which internally accommodates a respective push rod device 8 of the desired type mounted so as to axially project overhangingly from the flanged sleeve 25 and locked therein, for example, by means of a pin 26; the flanged sleeve 25 is shaped so as to be "slide-fit" (here and below, this term means a coupling substantially with no appreciable clearances), selectively and without distinction in a bushing 140 or within a device 11, in turn arranged in a seat 22 of the longitudinal beams 7 or of the independent units 15b,c.

Sleeve 25 has a cylindrical outer side surface 27 divided by a radial flange 27B, which serves as mounting shoulder for unit 14, in two stretches 28 and 29; stretch 28 of surface 27 is adapted to be coupled with a corresponding inner side surface 30 of each bushing 140, that is of a bushing 140B (figure 6) of each device 11, with which surface 30 stretch 28 is slide-fitted, as described; stretch 28 is preferably provided with an annular groove 31 with a receiving curved radial profile for the mechanical coupling means 13. Vice versa, stretch 29 projects overhangingly, in use, from bushing 140 or 140B in which unit 14 is received and is preferably provided with an annular groove or notch 32 adapted to allow, in use, and easier grasp of unit 14 by grippers 33 of robot 17.

To reduce plant costs, at least in an initial moment, the units 14 may be mounted in the seats 22 by means of the bushings 140 alone, rather than by means of the devices 11, in this case by removably locking the units 14 within the bushings 140 in any known manner, for example by means of threaded elements 141; in this case the replacement, for example, of the units 14b with unit 14c and vice versa may not occur automatically because the quick coupling and release devices 11 are missing, but rather will occur manually by means of operators; therefore in this case robot 17 is useless.

As already mentioned, a further reduction of costs may be obtained by directly fixing the push rod device 8 on the bushings 140; in this case, station 10 will be provided with rods 8 of the two types provided, rather than with units 14b and 14c and the replacement operations will be exclusively manual.

As already mentioned, the seats 22 of the longitudinal beams 7 are adapted to also receive the units 15b, 15c. To this end, the second independent mounting units of both the types 15b, 15c comprise a coupling portion 34 (figures 7 and 8) to the longitudinal beams 7, provided with at least one shank 35 insertable into a device 11 or into a bushing 140 in a manner similar to that described for the units 14. In the example shown in figures 7 and 8, each unit 15b, 15c is provided with a pair of shanks 35 which replicate the profile of stretch 28 of sleeve 25 and which are insertable in a pair of devices 11 accommodated in a pair of seats or holes 22 obtained side-by-side on a same longitudinal beam 7. In this case, when unit 15b 15c is not mounted on the longitudinal beam 7 but a unit 14 is mounted in its place in the position required, one of seats 22 of each pair remains empty.

The second independent mounting units of both the types 15b, 15c also comprise, at an end opposite to the coupling portion 34, a plate 36 provided with at least one seat 22 for a device 11 or a bushing 140 adapted to receive a unit 14.

According to a variant not illustrated for simplicity, the push rods 8 of the desired type may be integrally carried, in fixed manner, by the units 15b, 15c rather than being removably carried by them, by means of replacing of the units 14; in this case, there may be units 15b or 15c of different types, for example of a first and second type (similarly to the units 14), according to the type of push rod 8 ("slotted" or "pin"-type) mounted in fixed manner on the units 15b, 15c.

In any case, the devices 11 that may be accommodated in the seats 22 each comprise a bushing 140B (illustrated with reference to figure 6) similar to bushing 140 but provided internally with at least one elastic element, preferably a toroidal elastic ring 13 expandable in elastic manner both circumferentially and radially, for example as being cut radially, which elastic ring 13 forms the mechanical coupling means.

Ring 13 is accommodated in a radially inner annular groove 38 of bushing 140B and is adapted to selectively take, in use, a locking configuration (shown in figure 6), in which it exerts a radial pressure directed from the outside inwards on the flanged sleeve 27 belonging to the units 14 or shank 35 belonging to the units 15b, 15c, respectively, slide-fit inserted in bushing 140B, and a release configuration, not illustrated for simplicity, in which the elastic element 13 is elastically deformed radially outwards and no longer engages sleeve 37 or shank 35.

The shanks 35 are also provided with an annular groove 31, and ring 13 engages groove 31 in the locking configuration, while it is disengaged therefrom in the release configuration.

In the case in which the bushings 140 alone are used, the grooves 31 of sleeve 25 or of the shanks 35 are engaged by the threaded element 141.

The first pneumatic supply means 12 (and also the similar pneumatic supply means 12b) comprise at least a first channel 40 (figure 6) obtained inside bushing 140B and/or in a plate 36 of unit 15b, 15c, starting from an outer surface thereof and up to groove 38, at the at least one elastic element 13, and a quick coupling pneumatic nipple 41 (indicated diagrammatically with a block). Channel 40 is shaped so as to cause the elastic deformation of the elastic element 13 (ring) towards the release configuration when a compressed fluid (air or a hydraulic fluid, such as oil) is fed into channel 40 through nipple 41. In this case, the compressed fluid may indeed reach groove 31 and since it is not able to leave bushing 140/140B and/or seat 22 (or, in the case of air, it being able to leave but not to the degree equal to the flow rate due to the slide-fit coupling with sleeve 27/shank 35), it "widens" ring 13, which for this purpose is accommodated in groove 38 with wide radial clearance.

The second pneumatic supply means 16, carried in fixed manner by station 10, instead comprise at least one piping 45 for transporting the compressed fluid, for example compressed air, and at least one quick pneumatic/hydraulic coupling 46 for each piping 45, adapted to be selectively inserted into a nipple 41 when the balance holder 3 is positioned at the configuration station 10 due to the reference means 20, which, through the control station 21, may also possibly actuate a motorized positioning system of the pipes 45 and of the relative couplings 46.

As shown in figure 11, the pneumatic supply means 12b may also comprise a second channel 50 connected substantially in a fluid-tight manner to the first channel 40 and obtained inside the longitudinal beams 7 so as to supply several seats 22 in series by means of a single nipple 41 and therefore a single piping 45 and coupling 46 on station 10.

In case of pneumatic/hydraulic supply means 12, these are external and nipple 41 (figure 6) is carried by bushing 140B on an exposed outer surface thereof; in case of pneumatic supply means 12b (figure 11), channel 40 is also obtained inside the structure of unit 15b, 15c (for example, in the coupling portion 34) and nipple 41 is carried by an exposed surface of the independent unit 15b, 15c.

Again according to that shown in the variant in figure 11, part of channel 40, which supplies the seats 22 of the longitudinal beams 7 and the relative devices 11, may also be obtained inside the longitudinal beams 7 and in this case, nipple 41 is carried by an exposed surface of the longitudinal beam 7; in this manner, all the seats 22 of each longitudinal beam may be supplied with a single nipple 41, by means of deviation channels 50b.

With reference to the embodiments in figures 9 and 10, the coupling between units 15b, 15c and longitudinal beams 7 may occur both by means of movement parallel to the axis of the push rods 8 (figure 9), in which case the seats 22 of the longitudinal beams 7 are identical to the ones of the units 15b,c, and are all oriented with axis parallel to the one of the push rods 8, and they may receive a unit 14 or a unit 15b, 15c without distinction; or the coupling between units 15b 15c and longitudinal beams 7 may occur both with movement "from the outside" with respect to the balance holder 3, and therefore perpendicular to the axis of the push rods 8, in which case (figure 10) the seats 22 of the longitudinal beams 7 are oriented with axis perpendicular to the one of the push rods 8, and with concavity facing thereto. It is apparent in this second case that the units 14 may not be directly installed on the longitudinal beams 7, but a unit 15b,c must in any case be used, on which is carried a unit 14 or one or more push rods 8 coupled directly in fixed manner.

Each balance holder that equips plant 1 and that is suitable for being moved together with a plurality of other identical holders 3 along the transporting device 4 therefore has longitudinal beams 7 which each comprise, in use, a first portion 60, which is integrally obtained with the coupling portion 6 and a unit 15b or 15c and/or a plurality of units 14 constrainable to the first portion 60 of the longitudinal beam 7 by means of its own coupling element, in this case the shanks 35 or sleeve 27, which is insertable into one of the seats 22 provided with the simple bushing 140 or with a device 11, in which the coupling element 35/27 is snap locked by the mechanical coupling means formed by ring 13 or is pressure locked by an element 141.

Preferably, the coupling portion 6 consists of a portal frame open underneath and adapted to be carried hanging underneath from the transporting device 4; portion 60 of the longitudinal beams 7 is then integrally carried by frame 6, underneath frame 6. Furthermore, according to an aspect of the first embodiment of the invention described hereto, the length measured in direction D of the portions 60 is such that it corresponds substantially to the length of the longitudinal beams 7 configured for transporting shorter vehicle bodies, for example A-class.

With reference to figures 4 and 5, the warehouses 18 are arranged at station 10 and are an integral part thereof; they are organized as holders on which a plurality of pallets 70 and 71 are arranged, each marked by a code which may be identified or which is saved by/in the control station 21; the pallets 70 each carry a pair of units 15b or 15c suitable for completing the longitudinal beams 7 in the holder configuration to be obtained; the pallets 71 carry a plurality of units 14. Station 10 is preferably provided with at least three robots 17 arranged in tandem, i.e. aligned along direction D, to speed up operations. In any case, the pallets 70, 71 are arranged in positions that are easily reachable by the robots 17.

When there is a need to configure plant 1 for bodies 2 of vehicles belonging to class A or B, the balance holders are carried one at a time into station 10 and only the units 14 - already of suitable measurement because "short" - are mounted on portions 60, inserted directly into the bushings 140 or into the devices 11, accommodated in the seats 22, each unit 14 being equipped with a push rod 8 of the desired type; or, mounted on the portions 60 are the "short" units 15b, which can be equipped in turn with units 14 having the push rods 8 of the desired type or directly integrally provided with the push rods 8 of the desired type. The "correct" units 14 and/or 15b are selected by the robots 17 (or by an operator) by picking them from the most suitable pallets 70 or 71, and are mounted on portions 60; here the shanks 35 and/or the sleeves 27 are snap coupled onto the devices 11. When required, coupling is actuated by the control station 21, which actuates the pneumatic/hydraulic supply means 16, for example by emitting compressed air into the channels 40. When there is a need to change the holder configuration, the holders 3 are carried into station 10, the control station 21 actuates the supply means 16, for example by emitting compressed air into the channels 40 thus deforming (widening) the rings 13; the units 14 and/or 15 may thus be removed by the robots 17, to be replaced, for example, by units 15c adapted to allow the holding of "long" bodies belonging to vehicles of segment C or D. In this case as well, the push rods 8 of the desired type may be installed on the units 15c, directly or by means of units 14.

Obviously, all the operations described can be carried out manually by operators, especially in the absence of the devices 11, which are replaced for example by simple bushings 140.

With reference now to the figures from 13 to 19, they show a second embodiment of the invention, which allows an automatic or manual replacement of the push rods 8 to be obtained in a simple and affordable manner, not requiring hydraulic or pneumatic supply means.

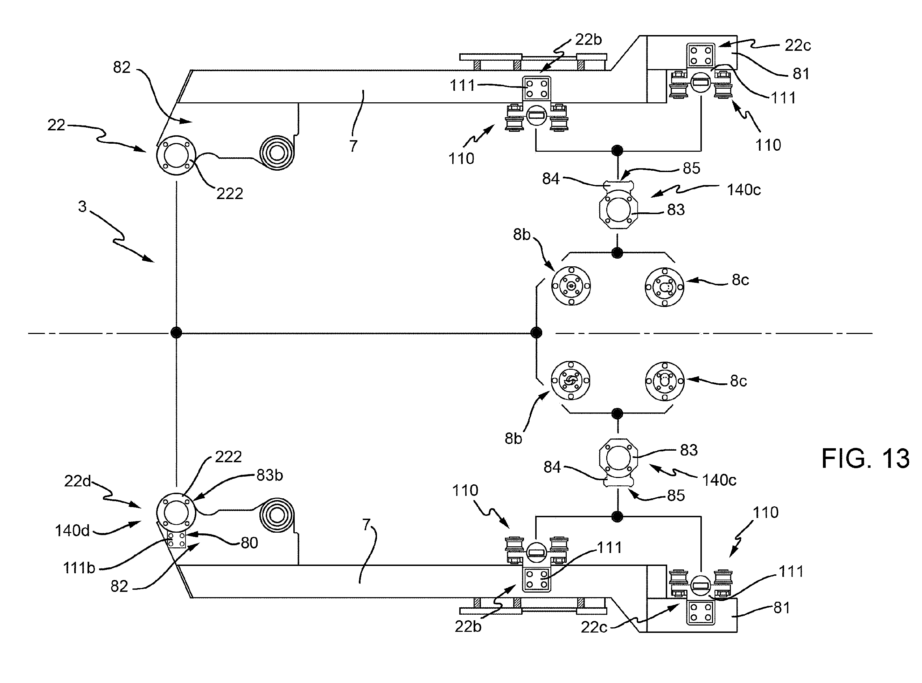

Figure 13 diagrammatically shows a balance holder or "hook" 3, with parts removed for clarity, of which only the pair of longitudinal beams 7 is shown, while the coupling portal portion 6 is not shown.

According to this embodiment, the longitudinal beams 7 are entirely integrally formed with the coupling portal portion 6 and have a length, measured in direction D, such as to substantially correspond to the length of longitudinal beams 7 configured for transporting longer vehicle bodies, for example of C, D -class. Therefore portions 60 are either missing or have a length equal to the maximum one required for the longitudinal beams 7.

The longitudinal beams 7 are each provided at the front (that is "downstream" of the operating direction D) with a receiving seat 22, in this non-limiting case shown defined by a blind or through hole, provided with a coupling flange 222 for receiving locking screws (not shown), of any known type.

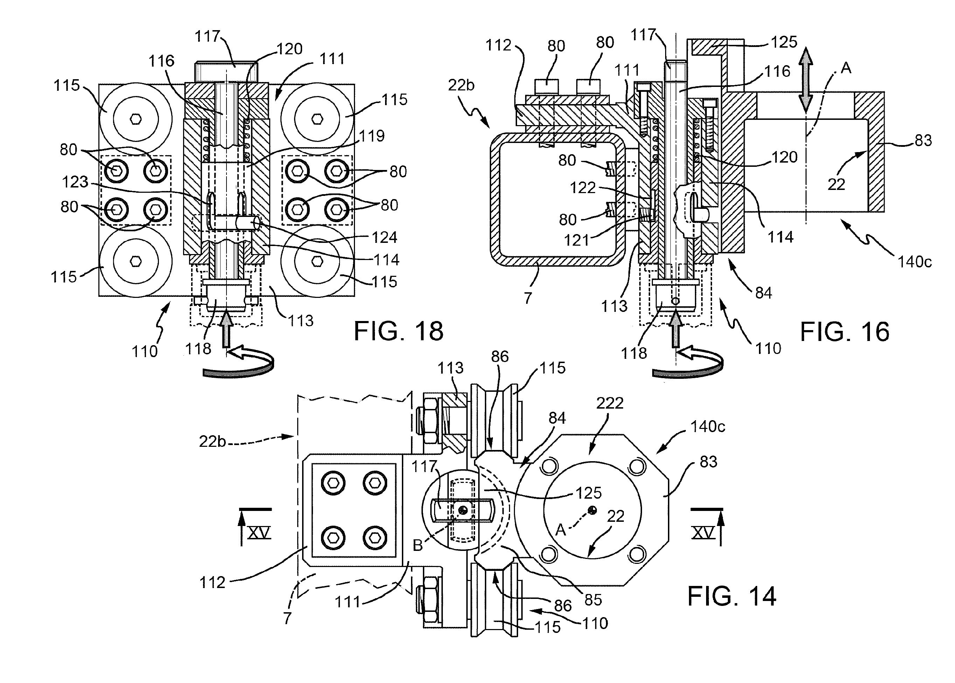

The longitudinal beams 7 are each provided at the back (that is "upstream" of the operating direction D) with a pair of further receiving seats 22, indicated with numerals 22b and 22c, which receiving seats 22b,c are defined in the example shown by simple portions of the side surface of the longitudinal beams 7 provided in the non-limiting example shown, with perforations for receiving screws 80 (figures 14, 15, 16); the screws 80 serve to obtain the removable fixing, in the seats 22b, c, of respective locking devices 110 which, unlike the devices 11, are of completely mechanical type, as will be seen, and which are described in detail below.

The front receiving seat 22 may also be replaced by a seat 22d (figure 13, bottom) made in similar manner to the seats 22b,c, i.e. rather than being defined by a hole and relative flange, defined by a simple surface portion of the respective longitudinal beam 7 provided with perforations for receiving screws 80.

A mounting unit 140c, which may be provided with a push rod 8 of the desired type, may be removably fixed to each locking device 110, in a manner that will be seen.

In particular, the seats 22b are arranged on the longitudinal beams 7 in the position along direction D in which the push rods 8 must be arranged for mounting "short" bodies 2, for example belonging to segment A, on the balance holders or hooks 3. Vice versa, the seats 22c are arranged along the longitudinal beams 7 at a rear end 81 of each longitudinal beam 7, opposite to a front end 82 of each longitudinal beam 7 provided with a seat 22 defined by a hole.

Therefore, the pair of seats 22 or 22d and 22b for each longitudinal beam 7 defines the fixing positions for "short" bodies (for example segments A, B), while the pair of seats 22 or 22d and 22c for each longitudinal beam 7 defines the fixing positions for "long" bodies (for example segments C, D). To this end, the ends 81 are also L-shaped, so as to increase the distance in the direction transverse to direction D between the pair of seats 22c, with respect to the distance transverse to direction D between the seats 22b.

Each mounting unit 140c is shown on enlarged scale and in greater detail in figures 14-17. It comprises a tubular sleeve or bush 83 of the type of bush 140, in the non-limiting embodiment, having outer prismatic shape, and a slide 84 which projects laterally overhangingly from sleeve or from bush 83. Internally, sleeve or bush 83 delimits a seat 22 defined by a through hole having two stretches with different diameter and symmetry axis A, and also provided with a flange 222 (figure 14) so as to be adapted to receive, in use, a push rod (push rod device) 8 of the desired type.

Slide 84 defines a flat plate 85 arranged tangent with respect to axis A and delimited by two sides 86 shaped like truncated Vs (that is with no vertex, which is replaced by a flat stretch) on a plane perpendicular to axis A.

Each locking device 110 comprises an L-bracket 111 which is fixed to a respective seat 22b,c by means of the screws 80; bracket 111 comprises two wings 112, 113, which are perpendicular to each other; wing 113 is arranged parallel to the position which the push rods 8 are to take, in use, in this case, it is arranged vertically oriented on the inner side of the longitudinal beam 7 (that is facing towards the other longitudinal beam 7), while wing 112 is arranged above the longitudinal beam 7 and is horizontal. Both the wings 112 and 113 are fixed to the relative longitudinal beam 7 by means of screws 80.

Wing 113 of each bracket 111 overhangingly carries, on a side opposite to the longitudinal beam 7 to which bracket 111 is fixed, a tubular sleeve 114 arranged between two pairs of idle rollers 115 arranged on wing 113 according to the vertices of a square at the center of which sleeve 114 is arranged. The rollers 115 are double cone rollers, shaped so as to define roller guides for slide 84, in particular adapted to slidingly receive plate 85 between each other to thus cause each mounting unit 140c to be mechanically constrained to a respective locking device 110; the mounting unit 140c can thus be inserted on/removed from the locking device 110 by simple vertical translation parallel to axis A, according to the direction indicated by the double arrow in figure 16.

To avoid the removal of the mounting units 140c from the locking devices 110, each of these ones comprises a pin 116 provided with a hammer head 117 and which is carried rotatably about its own axis B (figure 14) within sleeve 114.

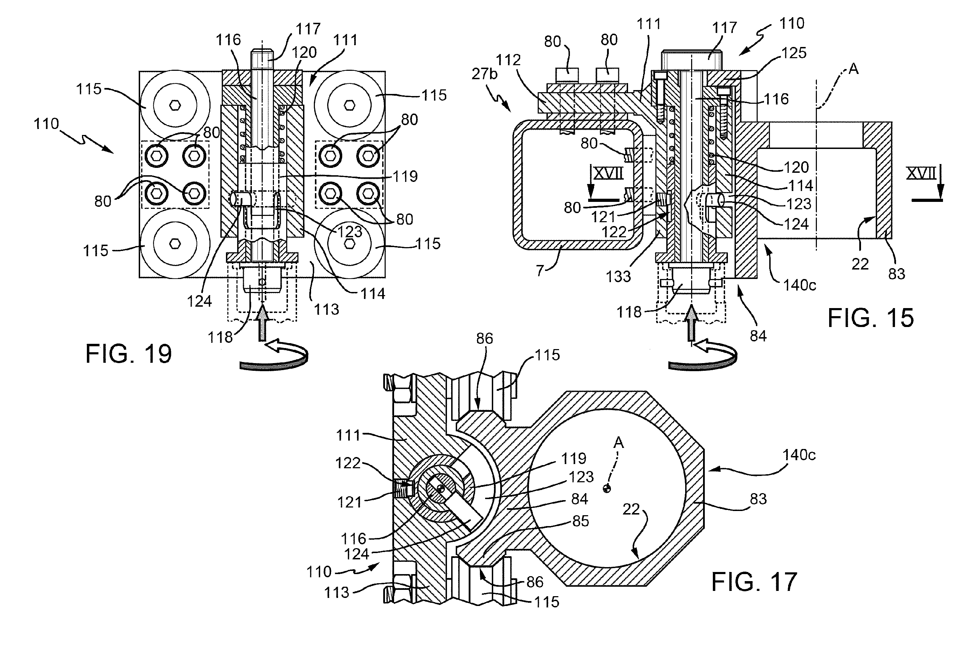

In particular, each pin 116 is provided with a handling head 118, opposite to head 117, by means of which it can be pushed and rotated, for example by a robot 17, along and about axis B, according to the direction indicated by the arrows in figures 15-18. About pin 116 within the respective sleeve 114, there is arranged a bush 119, which can slide axially in sleeve 114, parallel to axis B, against the action of a spring 120, but it cannot rotate about axis B, it being prevented by a threaded grub screw 121, which engages a groove 122 parallel to axis B.

Bush 119 is laterally provided with a through slit 123 which is partly circumferential and partly axial, which has a U shape on a vertical plane and which is engaged by a pin 124 through-carried transversely by pin 116.

Head 118 is adapted to cooperate, in use, with bush 119: when pin 116 is pushed along axis B in the direction of the arrow, head 118 indeed is brought to abut against bush 119 (figure 19), while if instead there is no axial push on pin 116, it normally separates (figure 18).

Plate 85 is provided with a nosepiece 125 facing on a side opposite to the tubular sleeve 83.

Normally, pin 116 is arranged in the configuration in figures 16 and 19 (and shown also with the dotted line in figure 14), in which it cannot interfere with nosepiece 125. In this configuration, the mounting units 140c can be freely inserted on, and removed from the locking devices 110.

Once a mounting unit 140, obviously provided with a push rod device 8 of desired type, is inserted in position on a device 110the latter is actuated by pushing on pin 116, for example with robot 17 or with suitable automatic tool of the configuration station 10 (or by means of an operator); the push causes bush 119 to ascend towards head 117, causing pin 124 to occupy the circumferential branch of groove or slit 123 (figure 18). In this position, robot 17 (or an operator) can rotate pin 116 so as to bring head 117 into the operating position in figures 14 (solid line), 15 and 19, thus engaging nosepiece 125 and accordingly avoiding any voluntary or accidental removal of slide 84 from the rollers 115. The mounting unit 140c is therefore locked on the longitudinal beam 7, integrally rigidly thereto, by means of device 110 in which it is engaged.

To release unit 140C and remove it from the longitudinal beam 7, it is sufficient to repeat the operation described (push and rotation on pin 116) but by rotating pin 116 in opposite direction, so as to cause it to resume the starting position and therefore to release unit 140c, which may be handled by robot 17 (or by other robot or by an operator) to be again both inserted and removed.

According to this embodiment, the warehouses 18 of station 10 are equipped only with mounting units 140c already equipped with push rod devices 8 of desired type, "pin"-type for some and "slotted" for others, and/or with push rod devices 8 of the two types to be mounted on empty units 140c or directly in the seats 22 of the ends 82.

To increase standardization, the receiving seat 22 of end 82 of each longitudinal beam 7 can be replaced by the receiving seat 22d already described, which is removably equipped with a simplified mounting unit 140d (shown only diagrammatically in figure 13) comprising a tubular sleeve or bush 83b delimiting a seat or hole 22 therein and provided with a mounting flange 222 for a push rod 8 of selected type; bush 83b is directly integrally obtained with a bracket 111b, which is bolted onto the receiving seat 22d by means of screws 80.

This simplified mounting unit 140d may obviously also be used at the receiving seats 22b and 22c, which in this case will not have the locking devices 110, in particular if the movement or replacement of the mounting units is carried out manually by operators.

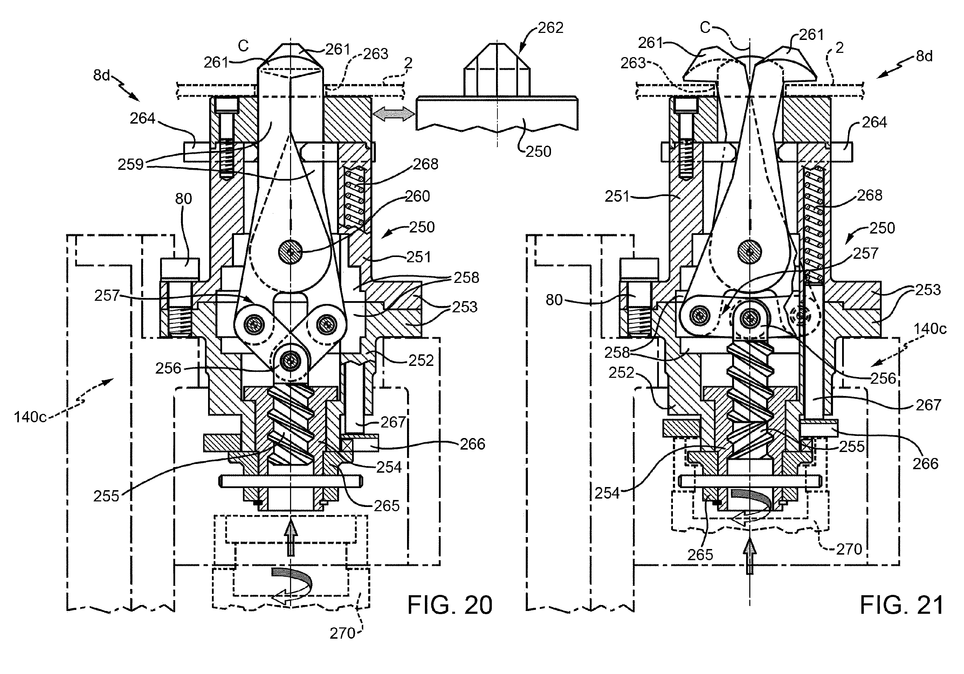

Finally, with reference to figures 20 and 21, plant 1 can be significantly simplified if, rather than using traditional push rods 8 of the two known "pin" and "slotted" types, the hooks or balance holders 3 are equipped with innovative push rod devices 8d of universal type, one of which is precisely shown in detail in figures 20 and 21, in two different operating positions thereof.

The push rod device 8d comprises a tubular body 250 having a symmetry axis C and divided into two sections 251 and 252 couplable head to head by means of flanges 253.

The tubular body 250 is made so as to be mountable within the seats 22 of the units 140c, to which it is integrally fixed, in use, on the flanges 222 by means of screws 80, which possibly also keep the flanges 253 coupled to each other, which are otherwise integrally fixed to one another by means of other screws, which are not shown for simplicity.

A nut screw 254 which engages with a worm screw 255, both coaxial with axis C, is accommodated within body 250, on the side of section 252; one end 256 of the worm screw 255, opposite to the nut screw 254, is connected to a pantograph mechanism 257 accommodated within slotted seats 258 of the two sections 251, 252.

The slotted seats 258 are obtained at the flanges 253, so as to be easily accessible when body 250 is open, and they prevent lateral movements of the pantograph mechanism 257 on a plane perpendicular to the one of the sheet in figures 20 and 21.

The pantograph mechanism 257 acts on two arms 259 pivoted scissor-wise on section 251 by means of a transversal pin 260; the arms 259 can selectively take a close position, shown in figure 20, and an open position, shown in figure 21, and end on a side opposite to the pantograph mechanism 257 with respective hook ends 261 (figure 21), which together with arms 259 in close position, form a conical-cylindrical head 262 (figure 20), which projects overhangingly from body 250 on a side opposite to section 252, which is coaxial with axis C.

Head 262 is divided into two L-shaped halves defined by the ends 261. Head 262 is also shaped so as to freely enter and leave, with a movement according to axis C, from coupling through seats 263 of bodies 2, both of the slot-shaped type and of the type defined by simple holes.

Cooperating with the arms 259 is a transversal pin 264 accommodated sliding through section 251 and which, outside body 250, takes two opposite overhanging operating positions, depending on whether the arms 259 are in close or open position, which can be detected by suitable known sensors, which are not disclosed for simplicity.

The nut screw 254 comes out of body 250 on a side opposite to head 262 and integrally carries, on the same side, a toothed head 265, which axially projects overhangingly from body 250. The toothed head 265 is adapted to cooperate with a toothed element 266 axially slidingly carried by section 252 externally thereto, and so as to not rotate relative to body 250.

That toothed element 266 is normally engaged with the toothed head 265 by means of stems 267 which are axially slidingly carried by body 250 and are pushed by springs 268 accommodated in special seats within section 251, so as to prevent the nut screw 254 from turning. However, the stems 267 can take a retracted position (figure 21) when the toothed element 266 is axially pushed by an external force against them, making it slide along body 250, while at the same time disengaging the toothed head 265.

Finally, the push rod device 8d according to the invention in general terms comprises the tubular body 250, at least two arms 259 pivoted scissor-wise within body 250, means for causing the at least two arms 259 to selectively take a close position in which respective hook ends 261 of the arms together form a conical-cylindrical head 262 which overhangingly projects from body 250, and an open position in which head 262 takes an open shape which defines at least one hammer head; and means for locking the at least two arms 259 at least in the open position, so that head 262 is adapted to engage without distinction through coupling seats 263 of the body both of the slot-shaped type and of the type defined by simple holes. It is apparent that the arms 259 could be greater in number than two, for example three or four, and be defined by segments of cylindrical elements, so that head 262 opens like a flower with the arms 259 in open position, thus forming more than one hammer head.

In use, the push rod devices 8d are each mounted fixed on a mounting unit 140c so that the heads 265 are accessible through seat 22, in particular by a suitable automatic tool 270 (shown diagrammatically with dotted line in figures 20 and 21), which equips the coupling and disconnection stations 19b and 19c of the bodies 2 to/from the hooks 3.

When the bodies 2 and the relative hooks 3 are positioned properly on a station 19b or 19c, a push rod device 8d constrained to a hook 3 is arranged at each seat 263 of a body 2.

To lock the bodies 2 onto the hooks 3, the heads 262, which are in the "closed" configuration in figure 20, are introduced into the seats 263, as is normally done with the "slotted" or "pin"-type push rods 8. Then, rather than simply rotating the entire push rod 8 as in the known art, each push rod device 8d is engaged by a tool 270, which is made so as to translate and rotate in the direction of the arrows in figures 20 and 21, and is shaped so as to couple with the toothed head 265 on a side opposite to the toothed element 266 and at the same time, to axially push the toothed element 266, without however engaging therewith in integrally angular manner.

Accordingly, while each tool 270 translates parallel to axis C towards head 265, it pushes element 266 against the stems 267, thus causing them to retract against the action of the springs 268, thus disconnecting head 265 from element 266. At the end of translation, carried out coaxially to axis C, tool 270 is in the position in figure 21, in which it integrally angularly engages head 265 and keeps the stems 267 in retracted position in body 250 and the toothed element 266 disconnected from the toothed head 265.

At this point, a rotation of tool 270, similar to the one carried out normally for actuating the known push rod devices 8, causes the nut screw 254 to rotate, which causes the worm screw 255 to translate, thus actuating the pantograph mechanism 257. The ends 261 of the arms 259 can therefore be caused to switch from the close position in figure 20 to the open position in figure 21, in which head 262 takes a "hammer" shape thus engaging body 2 on a side opposite to each seat 263. A successive axial retraction of tool 270 allows the return of element 266 to the starting position, thus blocking the rotation of head 265. Thereby, body 2 remains locked on hook 3 in a secure manner that cannot be accidentally released.

Other tools 270 for releasing the bodies 2 are provided in station 19c which carry out the same movement described, but by carrying out an inverse rotation; thereby, the worm screw 255 is caused to rotate in direction such as to bring the arms 259 back to close position and to "close back" head 262, which may thus be extracted from seat 263 by simple translation.

By equipping each mounting unit 140C with a push rod 8d, there is no longer a need to have warehouses in station 10. Each hook 3 is simply equipped with two universal push rods 8d mounted fixed on end 82 of each longitudinal beam 7, for example by means of a "simplified" mounting unit 140d, while the receiving seats 22b, c of each longitudinal beam 7 are all equipped with a locking device 110.

Finally, two mounting units 140c are mounted on each hook 3, each of which is also equipped in a fixed manner with a push rod 8d.

The mounting units 140c may be selectively fixed on the longitudinal beams 7 both at the receiving seats 22b and at the receiving seats 22c. The only operation required in station 10 to adapt hook 3 for receiving bodies 2 of the segments A, B or C, D is therefore the movement of the two mounting units 140c from the locking device 110 in a receiving seat 22b to the one in a receiving seat 22c, or vice versa.

All the objects of the invention are therefore achieved.

## Claims

1. A transporting plant (1) for vehicle bodies comprising a plurality of balance holders (3), each adapted to integrally receive a respective body, and a transporting device (4) which moves the balance holders along a path, for example at least partially defined by an assembly line; each balance holder being hanging underneath the transporting device by a coupling portion (6) thereof and comprising a pair of longitudinal beams (7) carried underneath by the coupling portion parallel to a moving direction (D) of the balance holders along the transporting device, each longitudinal beam being provided with at least one push rod device (8, 8d) adapted to lock a body onto the longitudinal beam; **characterized in that**, in combination:
i- the plant comprises at least one configuration station (10), in which each balance holder is configured according to the body that it must receive; and
ii- each longitudinal beam is provided with at least one receiving seat adapted to removably receive through a mounting unit (14; 15b, c; 140c; 140d) a respective push rod device (8, 8d) of the selected type.

2. A plant according to claim 1, **characterized in that** it comprises first mounting units (14; 140c) of a first and a second type, which integrally carry, each, a push rod device (8) of a first type and of a second type, respectively, different from each other.

3. A plant according to claim 1 or 2, **characterized in that** the mounting units (14;15b,c) are received by the longitudinal beams (7) by means of a bushing (140) or a locking device (11) with pneumatic or hydraulic release, the push rod device (8) of the selected type preferably being carried by a first mounting unit (14) removably connectable to the bushing (140) by means of a connecting member (141) or to the locking device (11) with pneumatic or hydraulic release, which is adapted to removably receive the first mounting unit (14) or a second mounting unit (15b; 15c) constituting an additional portion of the longitudinal beam and which can in turn receive, by means of a receiving seat (22) of the second mounting unit (15b; 15c) preferably identical to the seat (22) of the longitudinal beam (7), the bushing (140) or the locking device (11), on which a respective first mounting unit (14) is removably connectable;
the locking device (11) with pneumatic or hydraulic release comprising first quick coupling pneumatic or hydraulic supply means (12; 12b) and mechanical coupling means (13) with pneumatic or hydraulic disconnection; and
the configuration station (10) being provided with second pneumatic or hydraulic supply means (16) complementary to the first means and preferably, with at least one robot (17) for selectively handling the first and second mounting units (14, 15b; 15c), transferring them from the balance holder (3) to respective warehouses (18) of the station (10) or vice versa.

4. A plant according to claim 3, **characterized in that** the second mounting units (15b; 15c) are each provided with at least said one locking device (11) carried by a respective receiving seat (22) thereof, adapted to receive said one first mounting unit (14).

5. A plant according to claim 3 or 4, **characterized in that** it comprises second mounting units of a first (15b) and a second (15c) type, independent from each other, the second mounting units of the second type (15c) being longer than the second mounting units of the first type (15b) and being provided with a fold (150) so as to constitute, once coupled at said at least one seat (22) of a longitudinal beam, an extension of the longitudinal beam (7) both in the moving direction (D) of the balance holders along the transporting device, and in a perpendicular direction.

6. A plant according to one of the claims from 2 to 5, **characterized in that** the first mounting units (14) each comprise a flanged sleeve (27) which internally accommodates a respective push rod device (8) mounted so as to axially overhangingly project from the flanged sleeve, which is shaped so as to be selectively slide-fit accommodated in one said bushing (140) or in a bushing (140B) belonging to one said locking device (11); said flanged sleeve (27) being preferably provided, on an outer side surface thereof adapted to couple with a corresponding inner side surface (30) of said bushings (140; 14B), with an annular groove (31).

7. A plant according to the claim 6, **characterized in that** the second mounting units (15) comprise a portion (34) for coupling with the longitudinal beams, provided with at least one shank (35) insertable in one said bushing or locking device (11) and, at an end opposite to the coupling portion, a plate (36) provided with at least one said receiving seat (22).

8. A plant according to one of claims 6 or 7, **characterized in that** each said locking device (11) comprises a bushing (140B) internally provided with at least one elastic element (13), preferably an elastic ring seated in a radially inner annular groove (38) of the bushing (140B), adapted to selectively take, in use, a locking configuration, in which it exerts a radial pressure directed from the outside inwards on a flanged sleeve (27) belonging to the first mounting units (14) and/or on a shank (35) belonging to the second mounting units (15), respectively, slide-fit inserted into the bushing (140B), and a release configuration in which the elastic element (13) is elastically deformed radially outwards; said first pneumatic or hydraulic supply means (12; 12b) comprising at least a first channel (40) at least partially obtained inside the bushing (140B), starting from an outer surface thereof and up to the at least one elastic element (13), and a quick coupling nipple (41), the first channel being shaped so as to cause the elastic deformation of the elastic element (13) towards the release configuration when a compressed fluid is fed into the channel (40) through the nipple.

9. A plant according to claim 1 or 2, **characterized in that** the longitudinal beams (7) are entirely integrally formed with the coupling portion (6) and have a length, measured in said moving direction (D), such as to substantially correspond to the length of longitudinal beams configured for transporting bodies of longer vehicles; said longitudinal beams (7) being provided with first receiving seats (22b) arranged on the longitudinal beams (7) in a position along the moving direction (D) in which the push rod devices (8) must be arranged for mounting on the balance holders (3) bodies (2) of a first "short" type; and with second receiving seats (22c) arranged along the longitudinal beams at a rear end (81) of each longitudinal beam (7), opposite to a front end (82) of each longitudinal beam provided with a further receiving seat (22; 22d).

10. A plant according to claim 9, **characterized in that** the first and second receiving seats (22b,c) are integrally provided with respective locking devices (110) of a totally mechanical type; a mounting unit (140c), which may be provided with a push rod (8;8d) of the desired type being selectively removably fixable to each locking device (110) .

11. A plant according to claim 10, **characterized in that** each mounting unit (140c) comprises a tubular sleeve (83) and a slide (84) which projects laterally overhangingly from the tubular sleeve (83);the latter internally delimiting a receiving seat (22) defined by a hole having a symmetry axis (A) and adapted to receive in use a push rod device (8;8d) of the desired type; and **in that** each locking device (110) comprises a bracket (111) fixed in a first or a second receiving seat (22b,c) of the longitudinal beam (7) and comprising a first wing (113) fixed to a longitudinal beam (7) and arranged parallel to a position that the push rod devices (8;8d) must take in use; the bracket (111) overhangingly carrying, on a side opposite to the side of the longitudinal beam (7) to which it is fixed, a second tubular sleeve (114) arranged between two pairs of idle rollers (115) arranged according to the vertices of a square at the center of which the second sleeve (114) is arranged; the rollers (115) being adapted to define rolling guides for the slide (84) of the mounting unit (140c), which can be inserted on and removed from the locking device (110) by simple vertical translation; to make each mounting unit (140c) mechanically constrained to a respective locking device (110), the latter further comprising a first pin (116) provided with a hammer head (117) which is carried rotatably about an axis (B) thereof within said second tubular sleeve (114) and which is provided with a handling head (118), opposite to the hammer head (116), whereby it can be pushed and rotated along and about the axis (B) thereof; about the first pin (116) being arranged a bush (119) within the respective second sleeve (114), which bush (119) can axially slide in the second sleeve (114), parallel to said axis (B), against the action of a spring (120), but cannot rotate and which is laterally provided with a through slit (123) which is partly circumferential and partly axial, which has a U shape in a vertical plane and which is engaged by a second pin (124) carried transversely through by the first pin (116).

12. A balance holder (3) adapted to equip a transporting device which moves a plurality of balance holders along a path, comprising a portion (6) for coupling to the transporting device and a pair of longitudinal beams (7) carried underneath by the coupling portion parallel to a moving direction in use of the balance holders along the transporting device, each longitudinal beam being provided with at least one push rod device (8; 8d) adapted to lock a body onto the longitudinal beam; **characterized in that**, in combination:
a)- said longitudinal beams (7) comprise respective receiving seats (22) obtained on a first end (82) of at least one first portion of the longitudinal beams (60);
b)- said longitudinal beams comprise, each, said at least first portion (60) which is integrally obtained with the coupling portion (6), and at least a first and/or a second mounting unit (14; 15; 140c) selectively constrainable to the longitudinal beam in selected positions by a plurality of respective locking devices (11;110) fixed to the longitudinal beam (7) in predefined positions.

13. A push rod device for locking on a balance holder (3) of a transporting device (1) which moves a plurality of balance holders along a path, a respective vehicle body provided with coupling through seats (263) of the slot-shaped type or of the type defined by simple holes; **characterized in that** it comprises:
- a tubular body (250) having a symmetry axis (C) and divided into at least two sections (251, 252) couplable head to head and integrally constrainable to the balance holder (3);
- at least two arms (259) pivoted scissor-wise into the body (250);
- first means for selectively making the at least two arms (259) take a close position wherein respective hook ends (261) of the arms together form a first conical-cylindrical head (262) which overhangingly projects from the tubular body (250), and an open position wherein the first head (262) takes an open shape which defines at least one hammer head; and
- second means for locking said at least two arms (259) at least in the open position, so that the first head (262) is adapted to engage without distinction through seats (263) for coupling the vehicle body both of the slot-shaped type and of the type defined by simple holes.

14. A push rod device according to claim 13, **characterized in that** the first means comprise:
- a nut screw (254) accommodated into the tubular body (250) which engages with a worm screw (255);
- a pantograph mechanism (257) accommodated within slotted seats (258) of the tubular body (250) and acting on the arms (259), connected to one end (256) of the worm screw (255), opposite to the nut screw (254);
- a second head (265) integral to the nut screw (254) and toothed, axially overhangingly projecting from the body (250);
the second means comprising:
- a toothed element (266) axially slidingly carried by the tubular body (250) on a side opposite to the first head (262) and so as to not rotate relative to the tubular body;
- stems (267) axially slidingly carried by the tubular body (250) and pushed by springs (268) accommodated into special seats of the body for keeping the toothed element (266) normally engaged with the second head (265), so as to prevent the nut screw (254) from turning; the stems (267) being able to take a retracted position when the toothed element (266) is axially pushed by an external force against them, making it slide along the body (250), while disengaging the second head (265) from the toothed element.
